# EUROPEAN PATENT APPLICATION

(11) **EP 4 826 840 A1**
(43) Date of publication of application: **21.10.2026**
(21) Application number: 24916383.3
(22) Date of filing: 22.08.2024
(51) Int. Cl.: H01M 10/613

(54) **HEAT EXCHANGE DEVICE, HEAT EXCHANGE SYSTEM, BATTERY AND ELECTRICAL DEVICE**

(30) Priority: 11.01.2024 CN 202420072613 U
(71) Applicant: Contemporary Amperex Technology Co., Limited, Ningde, Fujian 352100 (CN)
(72) Inventor: SONG, Feiting, Ningde, Fujian 352100 (CN); WU, Qiaoyun, Ningde, Fujian 352100 (CN)
(74) Representative: Ziebig Hengelhaupt Intellectual Property Attorneys Patentanwaltskanzlei PartGmbB
(86) International application number: PCT/CN2024/113964
(87) International publication number: WO 2025/148329

(57) **Abstract**

A heat exchange device (13), a heat exchange system, a battery (10) and an electrical device, which belong to the technical field of batteries. The heat exchange device (13) is applied to the battery (10). The heat exchange device (13) comprises: a heat exchange body provided with a first heat exchange flow channel (1322) and a second heat exchange flow channel (1332); and an expansion valve (134), wherein an inlet end of the expansion valve (134) is connected to an outlet end of the first heat exchange flow channel (1322), and an outlet end of the expansion valve (134) is connected to an inlet end of the second heat exchange flow channel (1332). The second heat exchange flow channel (1332) comprises an upstream flow channel and a downstream flow channel which are connected in sequence, wherein the upstream flow channel is connected to the outlet end of the expansion valve (134), the upstream flow channel is configured to perform heat exchange with a battery cell (12), and the downstream flow channel is configured to perform heat exchange with the first heat exchange flow channel (1322).

## Description

### CROSS-REFERENCE TO RELATED APPLICATION

The present application is presented based on Chinese Patent Application No. 202420072613.5 filed on January 11, 2024, and claims the priority to the Chinese Patent Application, the content of which is incorporated herein by reference in its entirety.

### TECHNICAL FIELD

The present application relates to the technical field of batteries, and in particular, to a heat exchange device, a heat exchange system, a battery, and an electric device.

### BACKGROUND

Generally, a cold plate is used within a battery pack to exchange heat for battery cells. In the case where a heat exchange medium circulating within the cold plate is a heat exchange medium, the heat exchange medium, after flowing into the cold plate, changes from a gas-liquid mixed two-phase state to a gas phase. In the case of the two-phase state, the temperature fluctuation is smaller, and the heat exchange effect is stable. However, the heat exchange medium is completely vaporized at a position proximal to an outlet of the cold plate, and a higher temperature rise speed of the heat exchange medium leads to a large change in temperature difference, affecting the heat exchange effect.

### SUMMARY

The present application provides a heat exchange device, a heat exchange system, a battery, and an electric device, so as to solve the technical problem of a poor heat exchange effect caused by fast temperature change and large temperature difference of a flow channel at a position proximal to an outlet of a cold plate.

In a first aspect, the embodiments of the present application provide a heat exchange device. The heat exchange device is applied to a battery and includes:
a heat exchange body, provided with a first heat exchange flow channel and a second heat exchange flow channel; and
an expansion valve, an inlet end of the expansion valve being connected to an outlet end of the first heat exchange flow channel, and an outlet end of the expansion valve being connected to an inlet end of the second heat exchange flow channel;
where the second heat exchange flow channel includes an upstream flow channel and a downstream flow channel connected in sequence; the upstream flow channel is connected to the outlet end of the expansion valve, the upstream flow channel is configured to exchange heat with battery cells, and the downstream flow channel is configured to exchange heat with the first heat exchange flow channel.

In the above technical solution, a heat exchange medium within the upstream flow channel is in a two-phase state. The upstream flow channel exchanging heat with the battery cells results in better temperature uniformity and a better heat exchange effect. The heat exchange medium within the downstream flow channel is in a gas phase state. Residual cold of the heat exchange medium within the downstream flow channel is used to exchange heat for the first heat exchange flow channel to reduce the temperature of a front side of the expansion valve, thereby lowering the temperature of the heat exchange medium after passing through the expansion valve, and improving the heat exchange effect of the upstream flow channel on the battery cells and the overall energy utilization efficiency.

In some embodiments, the heat exchange body includes:
a heat exchange plate, provided with a first surface and a second surface opposite to each other;
a first flow channel plate, disposed to cover the first surface, where the first flow channel plate and the first surface define the first heat exchange flow channel; and
a second flow channel plate, disposed to cover the second surface, where the second flow channel plate and the second surface define the second heat exchange flow channel, and a region on the first surface corresponding to the upstream flow channel is configured to exchange heat with the battery cells; the first heat exchange flow channel exchanges heat with the downstream flow channel by means of the heat exchange plate.

In the above technical solution, the heat exchange plate, the first flow channel plate, and the second flow channel plate are arranged, which results in a simple assembly, high production efficiency, small occupied space, and a good heat exchange effect.

In some embodiments, the upstream flow channel and the downstream flow channel are sequentially arranged in a length direction of the heat exchange plate, and the first heat exchange flow channel and the downstream flow channel are arranged back-to-back on both sides of the heat exchange plate in a thickness direction of the heat exchange plate.

In the above technical solution, the upstream flow channel and the downstream flow channel are sequentially arranged in the length direction of the heat exchange plate, so as to facilitate the corresponding arrangement of the downstream flow channel and the first heat exchange flow channel.

In some embodiments, the heat exchange plate includes a first heat exchange region and a second heat exchange region distributed along the length direction of the heat exchange plate; the first heat exchange flow channel and the downstream flow channel are respectively located at two surfaces of the first heat exchange region, and the upstream flow channel is located in the second heat exchange region, where a length direction of the first heat exchange region extends along a width direction of the heat exchange plate.

In the above technical solution, the first heat exchange region is arranged on one side of the heat exchange plate in the length direction of the heat exchange plate, thereby facilitating the arrangement of the battery cells in the second heat exchange region and reducing the influence of the first heat exchange flow channel on the arrangement of the battery cells.

In some embodiments, the inlet end of the second heat exchange flow channel is provided proximal to a first side of the heat exchange plate in the width direction of the heat exchange plate; one end of the upstream flow channel connected to the downstream flow channel is provided proximal to a second side of the heat exchange plate in the width direction of the heat exchange plate, and the inlet end of the second heat exchange flow channel and the end of the upstream flow channel connected to the downstream flow channel are both provided proximal to the first heat exchange region; and
an outlet end of the second heat exchange flow channel is provided proximal to the first side of the heat exchange plate in the width direction of the heat exchange plate; the downstream flow channel extends along the width direction of the heat exchange plate, and one end of the downstream flow channel proximal to the second side of the heat exchange plate in the width direction of the heat exchange plate is connected to the upstream flow channel in a bending manner.

In the above technical solution, the flow direction layout of the second heat exchange flow channel is reasonable, so that the heat exchange effect on the battery cells is optimized, and the inlet end and the outlet end of the second heat exchange flow channel are arranged in a centralized manner, which facilitates the mounting of joints and optimizes the internal space layout of the battery.

In some embodiments, an inlet end and the outlet end of the first heat exchange flow channel are both located on the first flow channel plate, and the inlet end and the outlet end of the second heat exchange flow channel are both located on the first surface.

In the above technical solution, the inlet ends and the outlet ends of the first heat exchange flow channel and the second heat exchange flow channel are provided on the same side of the heat exchange plate, thereby facilitating the connection of pipelines.

In some embodiments, the expansion valve is mounted on the first surface.

In the above technical solution, the expansion valve is integrated on the heat exchange plate, so as to reduce the distance between the expansion valve and the second heat exchange flow channel, improving the heat exchange effect.

In some embodiments, a plurality of branch flow channels are provided in parallel between the inlet end and the outlet end of the second heat exchange flow channel; the branch flow channels include a first branch flow channel belonging to the upstream flow channel and a second branch flow channel belonging to the downstream flow channel.

In the above technical solution, the plurality of branch flow channels are provided, so as to shorten the flow channel length between the inlet end and the outlet end of the second heat exchange flow channel and increase the coverage area of the second heat exchange flow channel.

In some embodiments, spacing between two adjacent first branch flow channels is greater than spacing between two adjacent second branch flow channels.

In the above technical solution, the spacing between the branch flow channels is configured to be different, so as to increase the coverage area of the upstream flow channel and reduce the coverage area of the downstream flow channel, thereby optimizing the spatial layout.

In some embodiments, the first branch flow channel includes a plurality of first sub-segments and second sub-segments connected in sequence; the first sub-segment extends along a length direction of the heat exchange body, the plurality of first sub-segments are spaced apart from each other along a width direction of the heat exchange body, and the second sub-segment extends along the width direction of the heat exchange body; a first one among the first sub-segments is connected to the outlet end of the expansion valve, one end of each of two adjacent first sub-segments is connected by the second sub-segment, and a last one among the first sub-segments is connected to the inlet end of the second branch flow channel.

In some embodiments, N first sub-segments are provided, and N-1 second sub-segments are provided, where N is an even number, and N ≥ 2.

In some embodiments, the second branch flow channel includes a main body segment extending along the width direction of the heat exchange body and a connecting segment extending along the length direction of the heat exchange body; one end of the connecting segment is connected to the first branch flow channel, the other end of the connecting segment is connected to one end of the main body segment, and the other end of the main body segment is connected to the outlet end of the second heat exchange flow channel.

In some embodiments, the first heat exchange flow channel includes a plurality of first sub-flow channels extending along the width direction of the heat exchange body and distributed along the length direction of the heat exchange body, the plurality of first sub-flow channels being connected end-to-end; the first sub-flow channel corresponds to the main body segment of the second branch flow channel.

In some embodiments, circulation areas of the branch flow channels are the same.

In some embodiments, the second heat exchange flow channel further includes a first converging flow channel and a second converging flow channel; end parts of the plurality of branch flow channels are connected in parallel between the first converging flow channel and the second converging flow channel, the inlet end of the second heat exchange flow channel is provided at the first converging flow channel, and the outlet end of the second heat exchange flow channel is provided at the second converging flow channel.

In the above technical solution, the converging flow channels are provided to facilitate the communication of the plurality of branch flow channels, thereby simplifying the flow channel layout.

In some embodiments, the inlet end of the second heat exchange flow channel is located between 1/4 and 3/4 of the first converging flow channel in a length direction of the first converging flow channel, and the outlet end of the second heat exchange flow channel is located between 1/4 and 3/4 of the second converging flow channel in a length direction of the second converging flow channel.

In the above technical solution, positions of the inlet end and the outlet end of the second heat exchange flow channel are defined, so that the flow rate distribution within the plurality of branch flow channels is relatively uniform, thereby improving the heat exchange uniformity.

In some embodiments, circulation area of the first heat exchange flow channel proximal to the outlet end of the first heat exchange flow channel is larger than circulation area of the first heat exchange flow channel proximal to an entry end of the first heat exchange flow channel.

In the above technical solution, the circulation area of the first heat exchange flow channel is adjusted so that the heat exchange medium, before flowing into the expansion valve, slightly expands, which improves the expansion effect when the heat exchange medium subsequently passes through the expansion valve, thereby improving the heat exchange effect.

In some embodiments, the heat exchange body includes:
a first flow channel pipe, where the first heat exchange flow channel is formed within the first flow channel pipe; and
a second flow channel pipe, where the second heat exchange flow channel is formed within the second flow channel pipe, and the second flow channel pipe is disposed on one side of the first flow channel pipe in a thickness direction of the first flow channel pipe; a portion of the second flow channel pipe corresponding to the downstream flow channel exchanges heat with the first flow channel pipe, and a portion of the second flow channel pipe corresponding to the upstream flow channel, on one side facing the first flow channel pipe, is configured to exchange heat for the battery cells.

According to a second aspect, the embodiments of the present application provide a heat exchange system. The heat exchange system is applied to a battery and includes:
the heat exchange device according to any one of the embodiments in the first aspect;
a compressor, where an inlet end of the compressor is connected to an outlet end of the second heat exchange flow channel; and
a condenser, where an inlet end of the condenser is connected to an outlet end of the compressor, and an outlet end of the condenser is connected to an inlet end of the first heat exchange flow channel.

In the above technical solution, a heat exchange medium within the upstream flow channel of the heat exchange device is in a two-phase state. The upstream flow channel exchanging heat with the battery cells results in better temperature uniformity and a better heat exchange effect. The heat exchange medium within the downstream flow channel is in a gas phase state. Residual cold of the heat exchange medium within the downstream flow channel is used to exchange heat for the first heat exchange flow channel to reduce temperature of a front side of the expansion valve, thereby lowering temperature of the heat exchange medium after passing through the expansion valve, improving the heat exchange effect of the upstream flow channel on the battery cells and the overall energy utilization efficiency, and improving the durability of the compressor and the thermal management effect on the battery.

In a third aspect, the embodiments of the present application provide a battery. The battery includes:
a case;
a plurality of battery cells, where the plurality of battery cells are mounted within the case; and
the heat exchange system according to the second aspect, where the heat exchange system is mounted in the case and is configured to exchange heat with the plurality of battery cells.

In the above technical solution, the heat exchange system according to the second aspect is used to improve the working stability of the battery cells and the battery.

In a fourth aspect, the embodiments of the present application provide an electric device. The electric device includes:
the battery according to the third aspect, where the battery is configured to supply power to the electric device.

In the above technical solution, the battery according to the third aspect is used to improve the working stability of the electric device.

### BRIEF DESCRIPTION OF THE DRAWINGS

To more clearly illustrate the technical solutions in the embodiments of the present application, the drawings required for use in the embodiments will be briefly described hereinafter. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of the structure of a battery according to some embodiments of the present application;
FIG. 3 is a schematic structural diagram of a heat exchange device according to some embodiments of the present application;
FIG. 4 is an exploded view of the structure of a heat exchange device according to some embodiments of the present application;
FIG. 5 is a schematic structural diagram of a first heat exchange flow channel according to some embodiments of the present application;
FIG. 6 is a schematic structural diagram of a second heat exchange flow channel according to some embodiments of the present application; and
FIG. 7 is a schematic structural diagram of an expansion valve according to some embodiments of the present application.

### Reference numerals:

vehicle 1, battery 10, motor 20, controller 30;
case 11, first case body 111, second case body 112;
battery cell 12;
heat exchange device 13, heat exchange plate 131, first surface 1311, second surface 1312, second inlet 1313, second outlet 1314, first flow channel plate 132, first groove 1321, first heat exchange flow channel 1322, first sub-flow channel 13221, first inlet 1323, first outlet 1324, second flow channel plate 133, second groove 1331, second heat exchange flow channel 1332, first branch flow channel 13321, first sub-segment 13321a, second sub-segment 13321b, second branch flow channel 13322, main body segment 13322a, connecting segment 13322b, first converging flow channel 13323, second converging flow channel 13324, expansion valve 134.

### DETAILED DESCRIPTION

To make the objectives, technical solutions, and advantages of the embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the described embodiments of the present application can be combined with other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection; or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

The term "plurality of" used in the present application refers to no less than two (including two). Similarly, "plurality of groups" refers to two or more (including two) groups, and "plurality of pieces" refers to two or more (including two) pieces.

The battery cells mentioned in the embodiments of the present application may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module group, a battery pack, or the like. The battery generally includes a case used for encapsulating one or a plurality of battery cells or a plurality of battery module groups. The case may prevent a charging or discharging process of the battery cell from being affected by liquid or other foreign matter.

The battery cell includes a shell, an electrode assembly, and an electrolyte, and the shell is configured to accommodate the electrode assembly and the electrolyte. The electrode assembly consists of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, there are a plurality of positive electrode tabs that are stacked together, and there are a plurality of negative electrode tabs that are stacked together.

The material of the separator may be polypropylene (PP), polyethylene (PE), or the like. In addition, the electrode assembly may be of a wound structure or a stacked structure, but the embodiments of the present application are not limited thereto.

In recent years, new energy vehicles have developed by leaps and bounds. In the field of electric vehicles, power batteries, as the power source of electric vehicles, play an irreplaceable and important role. The battery consists of a case and a plurality of battery cells accommodated within the case. Batteries, as core components of new energy vehicles, have high requirements both in terms of safety and cycle service life.

In a general power battery, in order to cause the battery to obtain sufficient power, a plurality of battery cells within the case of the battery are usually stacked in an arrangement manner. However, the battery cells generate a large amount of heat in the process of continuous charging and discharging, which leads to an increase in the internal temperature of the battery. In addition, the structure of a plurality of battery cells stacked exacerbates the occurrence of such a phenomenon, which seriously affects the use performance and service life of the battery. This even leads to greater potential safety hazards during the use of the battery, which is not conducive to the safety of use for a consumer. Therefore, in the prior art, a cold plate is usually provided inside a battery to exchange heat for battery cells. In the case where a heat exchange medium circulating within the cold plate is a heat exchange medium, the heat exchange medium, after flowing into the cold plate, changes from a gas-liquid mixed two-phase state to a gas phase. In the case of the two-phase state, the temperature fluctuation is smaller, and the heat exchange effect is stable. However, the heat exchange medium is completely vaporized at a position proximal to an outlet of the cold plate, and a higher temperature rise speed of the heat exchange medium leads to a large change in temperature difference, so that the heat exchange effect of the cold plate for the battery cells at the position proximal to the outlet is poor, affecting the overall heat exchange effect.

Based on the above considerations, in order to solve the technical problem of the poor heat exchange effect caused by fast temperature change and large temperature difference of a flow channel at the position proximal to the outlet of the cold plate, a heat exchange device has been designed according to the present application. The heat exchange device is provided with a first heat exchange flow channel and a second heat exchange flow channel. The heat exchange device further includes: an expansion valve, where an outlet end of the first heat exchange flow channel is connected to an inlet end of the expansion valve, and an outlet end of the expansion valve is connected to an inlet end of the second heat exchange flow channel. The second heat exchange flow channel includes an upstream flow channel and a downstream flow channel connected in sequence from the inlet end to an outlet end, where the upstream flow channel is configured to exchange heat with battery cells, and the downstream flow channel is configured to exchange heat with the first heat exchange flow channel.

In the heat exchange device with such a structure, the upstream flow channel is more proximal to the expansion valve, so that the heat exchange medium within the upstream flow channel is in a two-phase state. The upstream flow channel exchanging heat with the battery cells results in better temperature uniformity and better heat exchange effect. The heat exchange medium within the downstream flow channel is in a gas phase state. Residual cold of the heat exchange medium within the downstream flow channel is used to exchange heat for the first heat exchange flow channel to reduce the temperature of a front side of the expansion valve, thereby lowering the temperature of the heat exchange medium after passing through the expansion valve, and improving the heat exchange effect of the upstream flow channel on the battery cells and the overall energy utilization efficiency.

The battery disclosed in the embodiments of the present application may, but is not limited to, be used in electric devices such as vehicles, ships, or aircraft. The power system of the electric device may be composed of the battery thermal management system, the battery, and the like disclosed in the present application, thereby facilitating expansion of the application scope of the battery thermal management system and reducing the assembly difficulty of the battery thermal management system.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1 as an example of the electric device according to an embodiment of the present application.

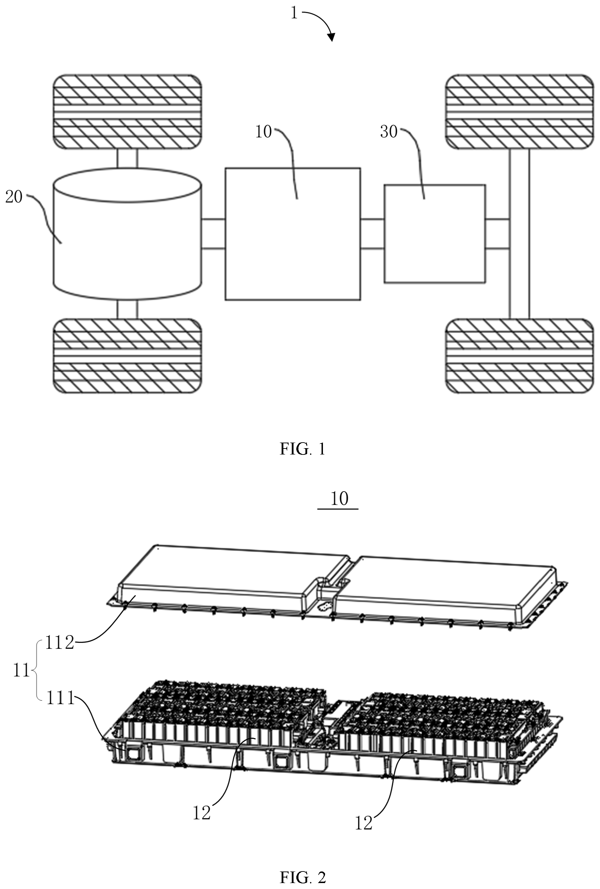

As shown in FIG. 1, FIG. 1 is a schematic structural diagram of a vehicle 1 according to one embodiment of the present application. The vehicle 1 may be a fuel vehicle, a gas vehicle, or a new energy vehicle. The new energy vehicle may be a pure electric vehicle, a hybrid vehicle, or an extended-range vehicle. A motor 20, a controller 30, and a battery 10 may be disposed inside the vehicle 1. The controller 30 is configured to control the battery 10 to power the motor 20. For example, the battery 10 may be disposed at the bottom, front, or rear of the vehicle 1. The battery 10 may be configured to supply power to the vehicle 1. For example, the battery 10 may serve as an operation power source for the vehicle 1 and is configured in a circuit system of the vehicle 1, for example, for the startup and navigation of the vehicle 1 and for the working power demand during operation. In another embodiment of the present application, the battery 10 may not only serve as an operation power source for the vehicle 1, but also serve as a driving power source for the vehicle 1 to, replacing or partially replacing fuel or natural gas, provide driving power for the vehicle 1.

To meet different power usage requirements, the battery 10 may include a plurality of battery cells 12. The plurality of battery cells 12 may be connected in series, in parallel, or in series-parallel. The series-parallel connection refers to a mixture of series connection and parallel connection.

As shown in FIG. 2, FIG. 2 is an exploded view of the structure of a battery 10 according to one embodiment of the present application. The battery 10 includes a case 11 and a plurality of battery cells 12. The battery cells 12 are configured to be accommodated within the case 11. The case 11 is configured to provide an assembly space for the battery cells 12, and the case 11 may be in various structures. In some embodiments, the case 11 may include a first case body 111 and a second case body 112. The first case body 111 and the second case body 112 are mutually lidded with each other. The first case body 111 and the second case body 112 jointly define an assembly space for accommodating the battery cells 12. The second case body 112 may be of a hollow structure with one end open, and the first case body 111 may be of a plate-shaped structure. The first case body 111 lids the open side of the second case body 112, such that the first case body 111 and the second case body 112 jointly define an assembly space; the first case body 111 and the second case body 112 may also both be of a hollow structure with one side open, and the open side of the first case body 111 lids the open side of the second case body 112. Certainly, the case 11 formed by the first case body 111 and the second case body 112 may be in various shapes, such as a cylinder and a rectangular parallelepiped.

In the battery 10, the plurality of battery cells 12 may be connected in series, in parallel, or in series-parallel. The series-parallel connection means that both series connection and parallel connection are present for the connection among the plurality of battery cells 12. The plurality of battery cells 12 may be directly connected in series, in parallel, or in series-parallel, and then the whole formed by the plurality of battery cells 12 is accommodated within the case 11. Certainly, the situation may be that in the battery 10, the plurality of battery cells 12 are first connected in series, in parallel, or in series-parallel to form battery modules, and then the plurality of battery modules are connected in series, in parallel, or in series-parallel to form a whole and accommodated within the case 11. The battery 10 may further include other structures. For example, the battery 10 may further include a busbar component for achieving an electrical connection among the plurality of battery cells 12.

Each battery cell 12 may be a secondary battery or a primary battery; it may also be a lithium-sulfur battery, a sodium-ion battery, or a magnesium-ion battery, but is not limited thereto. The battery cell 12 may be cylindrical, flat, rectangular parallelepiped-shaped, or in other shapes.

According to some embodiments of the present application, the present application provides a thermal management system applied to a battery 10. The thermal management system includes a heat exchange device 13, a compressor, and a condenser.

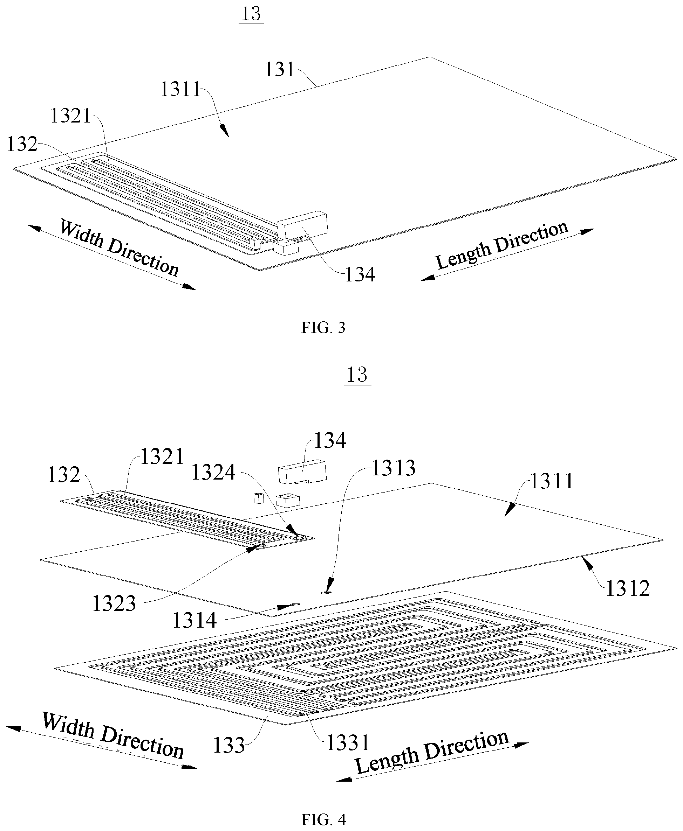

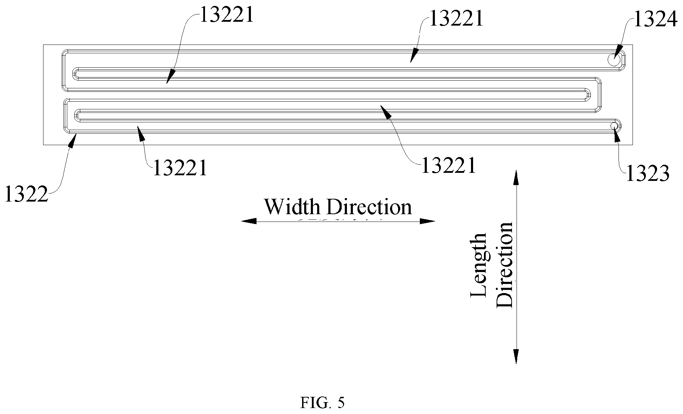

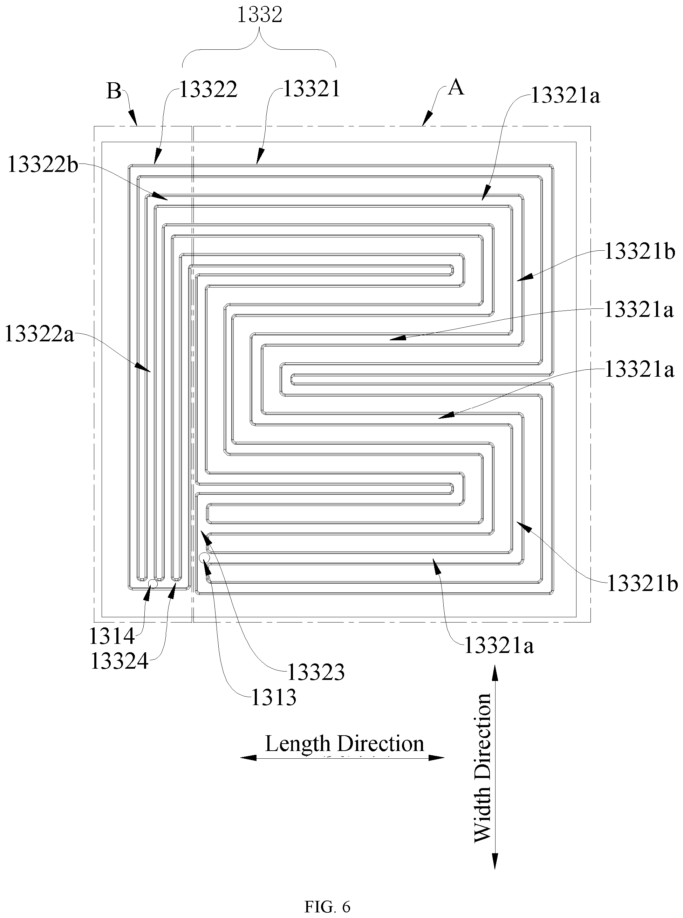

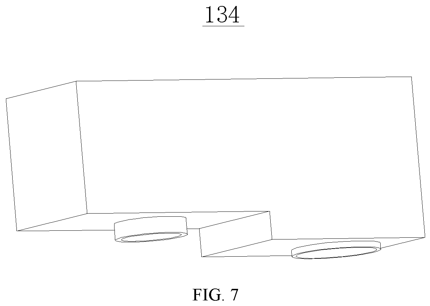

According to some embodiments of the present application, as shown in FIGs. 3 to 7, the present application further provides a heat exchange device 13 applied to the battery 10. FIG. 5 may also be a schematic structural diagram of a first flow channel plate 132 according to the embodiments of the present application. In order to facilitate the understanding of a first heat exchange flow channel 1322, the first heat exchange flow channel 1322 that can be formed by the first flow channel plate 132 is marked and described. FIG. 6 may also be a schematic structural diagram of a second flow channel plate 133 according to an embodiment of the present application. In order to facilitate the understanding of a second heat exchange flow channel 1332, the second heat exchange flow channel 1332 that can be formed by the second flow channel plate 133 is marked and described.

The heat exchange device 13 includes a heat exchange body, where the heat exchange body is provided with a first heat exchange flow channel 1322 and a second heat exchange flow channel 1332. The heat exchange device 13 further includes an expansion valve 134, where an inlet end of the expansion valve 134 is connected to an outlet end of the first heat exchange flow channel 1322, and an outlet end of the expansion valve 134 is connected to an inlet end of the second heat exchange flow channel 1332. An inlet end of the compressor is connected to an outlet end of the second heat exchange flow channel 1332; an inlet end of the condenser is connected to an outlet end of the compressor; an outlet end of the condenser is connected to an inlet of the first heat exchange flow channel 1322.

In order to facilitate understanding of the technical solutions, the circulation path of the heat exchange medium among the various components, starting from the inlet end of the compressor, and the state changes thereof are explained as follows:
1) The gaseous heat exchange medium enters the compressor via the inlet end of the compressor, and after being compressed by the compressor, becomes a high-temperature and high-pressure gaseous heat exchange medium, and flows out via the outlet end of the compressor.
2) The high-temperature and high-pressure gaseous heat exchange medium flows into the condenser via the inlet end of the condenser; the heat exchange medium is subjected to heat dissipation, condensation, and liquefaction by the condenser, so that the heat exchange medium is converted from a high-temperature and high-pressure gaseous state to a high-pressure liquid state. Meanwhile, the temperature of the heat exchange medium is reduced to a certain extent, and then the heat exchange medium flows out via the outlet end of the condenser.
3) The high-temperature and high-pressure liquid heat exchange medium enters the first heat exchange flow channel 1322 via the inlet end of the first heat exchange flow channel 1322, and flows out via the outlet end of the first heat exchange flow channel 1322.
4) The high-temperature and high-pressure liquid heat exchange medium enters the expansion valve 134 via an inlet segment of the expansion valve 134, and the heat exchange medium, when passing through the expansion valve 134, rapidly expands, with its temperature and pressure reduced and converted into a gas-liquid mixed two-phase state, and then flows out via the outlet end of the expansion valve 134.
5) The low-temperature and low-pressure two-phase heat exchange medium enters the second heat exchange flow channel 1332 via an inlet segment of the second heat exchange flow channel 1332, and exchanges heat with the battery cells 12 within the second heat exchange flow channel 1332; the heat exchange medium absorbs heat and gasifies during this process, and gradually transitions from a gas-liquid mixed two-phase state to a saturated gas state. The low-temperature and low-pressure gaseous heat exchange medium flows out via the outlet end of the second heat exchange flow channel 1332.
6) The low-temperature and low-pressure gaseous heat exchange medium circulates and flows back to the inlet end of the compressor, so that one cycle is completed.

In the embodiments, the second heat exchange flow channel 1332 includes an upstream flow channel and a downstream flow channel connected in sequence. The upstream flow channel is connected to the outlet end of the expansion valve 134. The upstream flow channel is configured to exchange heat with the battery cells 12. The downstream flow channel is configured to exchange heat with the first heat exchange flow channel 1322. With reference to FIG. 6, the second heat exchange flow channel 1332 is the upstream flow channel within the region indicated by A in FIG. 6, and is the downstream flow channel within the region indicated by B in FIG. 6.

The heat exchange medium, after entering the second heat exchange flow channel 1332 via the expansion valve 134, first flows through the upstream flow channel and then flows through the downstream flow channel, so that the heat exchange medium within the upstream flow channel is in a gas-liquid mixed two-phase state. The upstream flow channel exchanging heat with the battery cells 12 causes the latent heat of the heat exchange medium to increase and the sensible heat to be basically unchanged, so as to enable a stable heat exchange capacity of the heat exchange medium, uniform temperature, and uniform heat exchange effect on the battery cells 12 at various positions.

The heat exchange medium, when flowing to the downstream flow channel, has completely converted into gaseous saturated vapor. In this case, if the heat exchange medium continues to absorb heat, the sensible heat increases rapidly, and the temperature change speed is fast, resulting in a poor heat exchange effect at different positions. Therefore, the downstream flow channel is not used for heat exchange with the battery cells 12, thereby improving the uniformity of the overall temperature and the usage stability.

It can be understood that the heat exchange medium within the downstream flow channel, although having completely converted into a gaseous state, is still in a low-temperature and low-pressure state.

In the embodiments, the downstream flow channel is configured to exchange heat with the first heat exchange flow channel 1322. The downstream flow channel exchanges heat with the first heat exchange flow channel 1322. On the one hand, in the case where the heat exchange medium within the downstream flow channel is not suitable for exchanging heat for the battery cells 12, remaining cold of the heat exchange medium within the downstream flow channel can be used to reduce the temperature of the high-temperature and high-pressure liquid heat exchange medium within the first heat exchange flow channel 1322, so that the temperature is reduced before the heat exchange medium enters the expansion valve 134. As a result, the temperature of the heat exchange medium, after passing through the expansion valve 134, is lower, leading to a better heat exchange effect of the upstream flow channel and improved energy usage efficiency. On the other hand, the temperature of the high-temperature heat exchange medium within the first heat exchange flow channel 1322 can be used to heat the heat exchange medium within the downstream flow channel, so that the heat exchange medium within the downstream flow channel fully absorbs heat and gasifies. As a result, the heat exchange medium, before flowing back to the compressor, fully gasifies, achieving protection for the compressor and improved usage stability and durability of the heat exchange system.

According to the heat exchange device 13 provided by the embodiments of the present application, the heat exchange medium within the upstream flow channel is in a two-phase state. The upstream flow channel exchanging heat with the battery cells 12 results in better temperature uniformity and better heat exchange effect. The heat exchange medium within the downstream flow channel is in a gas phase state. Residual cold of the heat exchange medium within the downstream flow channel is used to exchange heat for the first heat exchange flow channel 1322 to reduce the temperature of a front side of the expansion valve 134, thereby lowering the temperature of the heat exchange medium after passing through the expansion valve 134, and improving the heat exchange effect of the upstream flow channel on the battery cells 12 and the overall energy utilization efficiency.

The heat exchange system according to the embodiments of the present application has the technical effects of the heat exchange device 13 described above. In addition, by using the heat exchange device 13, the heat exchange system improves the durability of the compressor and the thermal management effect on the battery 10.

According to some embodiments of the present application, as shown in FIGs. 3 to 6, the heat exchange body may include a heat exchange plate 131, a first flow channel plate 132, and a second flow channel plate 133.

The heat exchange plate 131 may be provided with a first surface 1311 and a second surface 1312 opposite to each other in a thickness direction of the heat exchange plate. The first flow channel plate 132 may be disposed to cover the first surface 1311. The first flow channel plate 132 and the first surface 1311 may define the first heat exchange flow channel 1322. The second flow channel plate 133 may be disposed to cover the second surface 1312. The second flow channel plate 133 and the second surface 1312 may define the second heat exchange flow channel 1332, and a region on the first surface 1311 corresponding to the upstream flow channel is configured for heat exchange of the battery cells 12. The first heat exchange flow channel 1322 exchanges heat with the downstream flow channel by means of the heat exchange plate 131. The first flow channel plate 132, the second flow channel plate 133, and the heat exchange plate 131 may be integrally formed by steel plate brazing. This results in simple production and processing, thinner thickness, small space occupation, and a good heat exchange effect.

The first flow channel plate 132 may be provided with a first groove 1321 recessed in a direction away from the heat exchange plate 131. The first groove 1321 and the first surface 1311 define the first heat exchange flow channel 1322. The second flow channel plate 133 may be provided with a second groove 1331 recessed in a direction away from the heat exchange plate 131. The second groove 1331 and the second surface 1312 define the second heat exchange flow channel 1332. A region at the first surface 1311 of the heat exchange plate 131 facing away from the upstream flow channel may be arranged as a plane, so as to facilitate the contact heat exchange of the battery cells 12 and facilitate the mounting of the battery cells 12.

The first heat exchange flow channel 1322 exchanges heat with the downstream flow channel by means of the heat exchange plate 131, so that the heat exchange medium within the first heat exchange flow channel 1322 exchanges heat with the heat exchange medium within the downstream flow channel.

According to the embodiments of the present application, the heat exchange plate 131, the first flow channel plate 132, and the second flow channel plate 133 are arranged, which results in a simple assembly, high production efficiency, small occupied space, and a good heat exchange effect.

According to some embodiments of the present application, as shown in FIGs. 3 to 6, the upstream flow channel and the downstream flow channel may be sequentially arranged in a length direction of the heat exchange plate 131, and the first heat exchange flow channel 1322 and the downstream flow channel may be arranged back-to-back on both sides of the heat exchange plate 131 in a thickness direction of the heat exchange plate.

The upstream flow channel and the downstream flow channel are sequentially arranged in the length direction of the heat exchange plate 131, so as to facilitate the corresponding mounting of the first flow channel plate 132, thereby optimizing the flow channel layout.

It can be understood that back-to-back arrangement means that a region of the first heat exchange flow channel 1322 covering the first surface 1311 corresponds to a region of the downstream flow channel covering the second surface 1312, and does not mean that a circulation path of the first heat exchange flow channel 1322 completely corresponds to and is consistent with a circulation path of the downstream flow channel. However, the circulation path of the first heat exchange flow channel 1322 is arranged to at least partially correspond to the circulation path of the downstream flow channel to improve the heat exchange effect between the first heat exchange flow channel 1322 and the downstream flow channel.

According to some embodiments of the present application, as shown in FIGs. 3 to 6, the heat exchange plate 131 may include a first heat exchange region and a second heat exchange region distributed along the length direction of the heat exchange plate 131. The first heat exchange flow channel 1322 and the downstream flow channel may be respectively located at two surfaces of the first heat exchange region. The upstream flow channel may be located in the second heat exchange region. A length direction of the first heat exchange region may extend along a width direction of the heat exchange plate 131.

In the embodiments, the heat exchange plate 131 is divided into a first heat exchange region and a second heat exchange region distributed along the length direction of the heat exchange plate 131, so that the regions are clearly divided and the space utilization is high, thereby facilitating the mounting layout when assembling with the battery cells 12.

The first surface 1311 of the first heat exchange region of the heat exchange plate 131 and the first flow channel plate 132 form the first heat exchange flow channel 1322. The second surface 1312 of the first heat exchange region of the heat exchange plate 131 and the second flow channel plate 133 form the downstream flow channel. The second surface 1312 of the second heat exchange region of the heat exchange plate 131 and the second flow channel plate 133 form the upstream flow channel.

The first heat exchange region may be configured for the first heat exchange flow channel 1322 to exchange heat with the downstream flow channel. The second heat exchange region may be configured for the upstream flow channel to exchange heat with the battery cells 12. The length direction of the first heat exchange region extends along the width direction of the heat exchange plate 131, and the length direction of the heat exchange plate 131 intersects with the width direction of the heat exchange plate 131, reducing the space occupied by the first heat exchange region in the length direction of the heat exchange plate 131, and thus facilitating the arrangement of the plurality of battery cells 12 at the second heat exchange region.

According to the embodiments of the present application, the first heat exchange region is arranged on one side of the heat exchange plate 131 in the length direction of the heat exchange plate 131, thereby facilitating the arrangement of the battery cells 12 in the second heat exchange region, and reducing the influence of the first heat exchange flow channel 1322 on the arrangement of the battery cells 12.

According to some embodiments of the present application, as shown in FIGs. 4 and 6, the inlet end of the second heat exchange flow channel 1332 may be provided proximal to a first side of the heat exchange plate 131 in the width direction of the heat exchange plate; one end of the upstream flow channel connected to the downstream flow channel may be provided proximal to a second side of the heat exchange plate 131 in the width direction of the heat exchange plate; the inlet end of the second heat exchange flow channel 1332 and the end of the upstream flow channel connected to the downstream flow channel are both provided proximal to the first heat exchange region. The outlet end of the second heat exchange flow channel 1332 is provided proximal to the first side of the heat exchange plate 131 in the width direction of the heat exchange plate; the downstream flow channel extends along the width direction of the heat exchange plate 131, and one end of the downstream flow channel proximal to the second side of the heat exchange plate 131 in the width direction of the heat exchange plate is connected to the upstream flow channel in a bending manner.

In the embodiments, the inlet end of the second heat exchange flow channel 1332 and the end of the upstream flow channel connected to the downstream flow channel are respectively provided on the first side and the second side of the heat exchange plate in the width direction of the heat exchange plate, so that the overall flow direction of the heat exchange medium within the upstream flow channel is flowing from the first side of the heat exchange plate in the width direction of the heat exchange plate toward the second side of the heat exchange plate in the width direction of the heat exchange plate. Illustratively, the upstream flow channel may be provided in a bending manner as shown in FIG. 6 to improve the coverage area of the upstream flow channel at the first heat exchange region. In other examples, the upstream flow channel may also be provided in other bending manners, which are not limited herein.

In the embodiments, the inlet end of the second heat exchange flow channel 1332 and the end of the upstream flow channel connected to the downstream flow channel are both arranged on one side of the first heat exchange region proximal to the second heat exchange region, thereby facilitating the transition between the upstream flow channel and the downstream flow channel.

In addition, the downstream flow channel may extend along the width direction of the heat exchange plate 131. Illustratively, as shown in FIG. 6, the overall flow direction of the downstream flow channel is linear, which reduces the space occupied by the downstream flow channel. The end of the downstream flow channel proximal to the second side of the heat exchange plate 131 in the width direction of the heat exchange plate is connected to the upstream flow channel in a bending manner; the outlet end of the second heat exchange flow channel 1332 is provided proximal to the first side of the heat exchange plate 131 in the width direction of the heat exchange plate, so that the inlet end of the second heat exchange flow channel 1332 and the outlet end of the second heat exchange flow channel 1332 are provided proximal to each other, which facilitates the centralized arrangement of pipeline joints, optimizing the spatial layout.

According to some embodiments of the present application, as shown in FIG. 4, both the inlet end and the outlet end of the first heat exchange flow channel 1322 may be located on the first flow channel plate 132; both the inlet end and the outlet end of the second heat exchange flow channel 1332 may be located on the first surface 1311.

A surface of the first flow channel plate 132 facing away from the heat exchange plate 131 may be provided with two through holes. The two through holes on the first flow channel plate 132 are a first inlet 1323 and a first outlet 1324, respectively. The first inlet 1323 forms the inlet end of the first heat exchange flow channel 1322, and the first outlet 1324 forms the outlet end of the first heat exchange flow channel 1322. In addition, the first inlet 1323 and the first outlet 1324 are both provided proximal to the first side of the heat exchange plate 131 in the width direction of the heat exchange plate.

The heat exchange plate 131 may also be provided with two through holes. The through holes may connect the first surface 1311 and the second surface 1312 of the heat exchange plate 131. The two through holes on the heat exchange plate 131 are a second inlet 1313 and a second outlet 1314, respectively. The second inlet 1313 may form the inlet end of the second heat exchange flow channel 1332, and the second outlet 1314 may form the outlet end of the second heat exchange flow channel 1332. The two through holes on the heat exchange plate 131 are arranged in a staggered manner with respect to the first flow channel plate 132 to facilitate pipeline connection.

According to the embodiments of the present application, the inlet ends and the outlet ends of the first heat exchange flow channel 1322 and the second heat exchange flow channel 1332 are provided on the same side of the heat exchange plate 131, thereby facilitating the arrangement of pipeline joints and the connection of pipelines.

According to some embodiments of the present application, as shown in FIGs. 3, 4, and 7, the expansion valve 134 may be mounted on the first surface 1311.

In the embodiments, the expansion valve 134 is mounted on the first surface 1311 of the heat exchange plate 131, so that the expansion valve 134 is integrated at the surface of the heat exchange plate 131, thereby shortening the distance between the outlet end of the expansion valve 134 and the inlet end of the second heat exchange flow channel 1332. The heat exchange medium, after flowing out from the expansion valve 134, directly enters the upstream flow channel, which results in reduced energy loss and a better heat exchange effect.

According to the embodiments of the present application, the expansion valve 134 is integrated on the heat exchange plate 131, so as to reduce the distance between the expansion valve 134 and the second heat exchange flow channel 1332, improving the heat exchange effect.

In some other embodiments, the expansion valve 134 may be mounted inside or outside the case 11; the inlet end of the expansion valve 134 is connected to the outlet end of the first heat exchange flow channel 1322 by means of a pipeline, and the outlet end of the expansion valve 134 is connected to the inlet end of the second heat exchange flow channel 1332 by means of a pipeline, thereby facilitating the mounting and arrangement of the heat exchange device 13, and optimizing the internal space design of the case 11. This is conducive to the integral brazing of the heat exchange plate 131, the first flow channel plate 132, and the second flow channel plate 133.

According to some embodiments of the present application, as shown in FIGs. 4 and 6, a plurality of branch flow channels may be provided in parallel between the inlet end and the outlet end of the second heat exchange flow channel 1332. The branch flow channels include a first branch flow channel 13321 belonging to the upstream flow channel and a second branch flow channel 13322 belonging to the downstream flow channel.

In the embodiments, the second heat exchange flow channel 1332 consists of a plurality of branch flow channels. The plurality of branch flow channels are provided in parallel. By providing the plurality of branch flow channels, in the case of the same total heat exchange area, the circulation distance of the heat exchange medium between the inlet end and the outlet end of the second heat exchange flow channel 1332 can be shortened, thereby improving the heat exchange effect. The number of the branch flow channels is not limited herein and may be two, three, four, or more than four, which is determined according to the design of various parameters. Illustratively, in FIG. 6, four branch flow channels are provided.

According to some embodiments of the present application, as shown in FIG. 6, spacing between two adjacent first branch flow channels 13321 may be greater than spacing between two adjacent second branch flow channels 13322.

In the embodiments, the spacing between two adjacent first branch flow channels 13321 is increased to increase the coverage area of the upstream flow channel, and the spacing between two adjacent second branch flow channels 13322 is reduced to reduce the coverage area of the downstream flow channel. This optimizes the spatial layout, thereby improving the heat exchange efficiency and heat exchange effect.

According to some embodiments of the present application, as shown in FIG. 6, the first branch flow channel 13321 may include a plurality of first sub-segments 13321a and second sub-segments 13321b connected in sequence. The first sub-segment 13321a extends along a length direction of the heat exchange body. The plurality of first sub-segments 13321a are spaced apart from each other along a width direction of the heat exchange body. The second sub-segment 13321b extends along the width direction of the heat exchange body. The first one among the first sub-segments 13321a is connected to the outlet end of the expansion valve 134. One end of each of two adjacent first sub-segments 13321a is connected by the second sub-segment 13321b. The last one among the first sub-segments 13321a is connected to the inlet end of the second branch flow channel 13322.

In the embodiments, the arrangement of the first branch flow channel 13321 causes the first branch flow channel 13321 to be arranged in a circuitous and bent shape, which optimizes the flow channel layout, thereby facilitating the connection between the flow channels and effectively covering the heat exchange region.

According to some embodiments of the present application, N first sub-segments 13321a may be provided, and N-1 second sub-segments 13321b may be provided, where N may be an even number, and N ≥ 2. By setting N ≥ 2, the first branch flow channel 13321 is arranged to detour and bend at least once, so as to facilitate increasing the coverage area of the first branch flow channel 13321 and facilitate covering the heat exchange region of the battery cells. Illustratively, in FIG. 6, four first sub-segments 13321a may be provided, and three second sub-segments 13321b may be provided. The first branch flow channel 13321 detours and bends three times.

According to some embodiments of the present application, as shown in FIG. 6, the second branch flow channel 13322 includes a main body segment 13322a extending along the width direction of the heat exchange body and a connecting segment 13322b extending along the length direction of the heat exchange body. One end of the connecting segment 13322b is connected to the first branch flow channel 13321. The other end of the connecting segment 13322b is connected to one end of the main body segment 13322a. The other end of the main body segment 13322a is connected to the outlet end of the second heat exchange flow channel 1332.

In the embodiments, a plurality of main body segments 13322a are distributed along the length direction of the heat exchange body. By arranging the main body segments 13322a that extend along the width direction of the heat exchange body, the space occupied by the downstream flow channel is minimized. The arrangement of the connecting segment 13322b facilitates the connection with the first branch flow channel 13321.

According to some embodiments of the present application, as shown in FIGs. 4 and 5, the first heat exchange flow channel 1322 includes a plurality of first sub-flow channels 13221 extending along the width direction of the heat exchange body and distributed along the length direction of the heat exchange body, the plurality of first sub-flow channels 13221 being connected end-to-end. The first sub-flow channel 13221 corresponds to the main body segment 13322a of the second branch flow channel 13322.

In the embodiments, the first heat exchange flow channel 1322 may include a plurality of segments of first sub-flow channels 13221 extending along the width direction of the heat exchange body and distributed along the length direction of the heat exchange body. The plurality of segments of first sub-flow channels 13221 are connected end-to-end along a flow direction and connected in series to form the first heat exchange flow channel 1322. The plurality of segments of first sub-flow channels 13221 connected in series are provided to extend the circulation length of the first heat exchange flow channel 1322, thereby improving the heat exchange effect of the first heat exchange flow channel 1322, and reducing the temperature of the heat exchange medium passing through the first heat exchange flow channel 1322 as much as possible.

In some embodiments, as shown in FIGs. 4 to 6, the number of first sub-flow channels 13221 may be the same as the number of the branch flow channels 13321. The plurality of first sub-flow channels 13221 may be made to correspond one-to-one with the main body segments 13322a of the plurality of second branch flow channels 13322, thereby improving the heat exchange effect between the first heat exchange flow channel 1322 and the downstream flow channel.

According to some embodiments of the present application, circulation areas of the branch flow channels may be the same, and circulation areas of the first branch flow channel 13321 and the second branch flow channel 13322 in a single branch flow channel may be the same, so that flow rates of the heat exchange medium within the branch flow channels are relatively uniform, thereby improving the uniformity of heat exchange.

In the embodiments, width of the branch flow channel may be 6 mm-10 mm. Specifically, the width of the branch flow channel may be 6 mm, 6.5 mm, 7 mm, 7.5 mm, 8 mm, 8.5 mm, 9 mm, 9.5 mm, 10 mm, or other values between 6 mm-10 mm. Height of the branch flow channel may be 2 mm-4 mm. Specifically, the height of the branch flow channel may be 2 mm, 2.5 mm, 3 mm, 3.5 mm, 4 mm, or other values between 2 mm-4 mm. Wall thickness of the branch flow channel may be 1 mm-2 mm. Specifically, the wall thickness of the branch flow channel may be 1 mm, 1.2 mm, 1.4 mm, 1.5 mm, 1.6 mm, 1.8 mm, 2 mm, or other values between 1 mm-2 mm.

According to some embodiments of the present application, as shown in FIG. 6, the second heat exchange flow channel 1332 further includes a first converging flow channel 13323 and a second converging flow channel 13324. End parts of the plurality of branch flow channels are connected in parallel between the first converging flow channel 13323 and the second converging flow channel 13324. The inlet end of the second heat exchange flow channel 1332 is provided at the first converging flow channel 13323. The outlet end of the second heat exchange flow channel 1332 is provided at the second converging flow channel 13324.

By arranging the first converging flow channel 13323 and the second converging flow channel 13324, end parts of the branch flow channels are enabled to be in communication with each other, thereby facilitating centralized distribution of the heat exchange medium in the branch flow channels. Illustratively, in FIG. 6, the first converging flow channel 13323 extends along the width direction of the heat exchange body, so as to facilitate the connection of the first converging flow channel 13323 to the first one of the first sub-segments 13321a of the first branch flow channels 13321; the second converging flow channel 13324 extends along the length direction of the heat exchange body, so as to facilitate the connection of the second converging flow channel 13324 to the main body segments 13322a of the second branch flow channels 13322.

According to some embodiments of the present application, as shown in FIG. 6, the inlet end of the second heat exchange flow channel 1332 may be located between 1/4 and 3/4 of the first converging flow channel 13323 in a length direction of the first converging flow channel, and the outlet end of the second heat exchange flow channel 1332 may be located between 1/4 and 3/4 of the second converging flow channel 13324 in a length direction of the second converging flow channel.

The inlet end of the second heat exchange flow channel 1332 is provided between 1/4 and 3/4 of the first converging flow channel 13323 in the length direction of the first converging flow channel, so that the heat exchange medium, after entering the first converging flow channel 13323, can be relatively evenly distributed to the plurality of branch flow channels, thereby improving the uniformity of the flow rates of the heat exchange medium in the branch flow channels. The outlet end of the second heat exchange flow channel 1332 is provided between 1/4 and 3/4 of the second converging flow channel 13324 in the length direction of the second converging flow channel, so as to facilitate the heat exchange medium in the branch flow channels flowing out, and reasonably distribute the circulation resistance of the branch flow channels, thereby improving the uniformity.

Illustratively, in FIG. 6, four first sub-segments 13321a of the first branch flow channel 13321 are provided along the width direction of the heat exchange body, and the inlet end of the second heat exchange flow channel 1332 corresponds to the third first sub-segment 13321a; four main body ends 13322a of the second branch flow channel 13322 are provided along the length direction of the heat exchange body, and the outlet end of the second heat exchange flow channel 1332 corresponds to the third main body segment 13322a. The third main body segment 13322a and the third first sub-segment 13321a belong to the same branch flow channel. According to some embodiments of the present application, as shown in FIG. 5, circulation area of the first heat exchange flow channel 1322 proximal to the outlet end of the first heat exchange flow channel may be greater than circulation area of the first heat exchange flow channel 1322 proximal to the entry end of the first heat exchange flow channel.

In the embodiments, the circulation area of the first heat exchange flow channel 1322 is changed, so that in the process of the heat exchange medium circulating within the first heat exchange flow channel 1322 from the inlet end to the outlet end, the pressure is reduced due to the increase in the circulation area. As a result, the heat exchange medium, before entering the expansion valve 134, slightly expands to a certain extent, which improves the expansion effect when the heat exchange medium subsequently passes through the expansion valve 134, thereby improving the heat exchange effect.

The outlet end of the first heat exchange flow channel 1322 is disposed at a first sub-flow channel 13221 of the plurality of first sub-flow channels 13221 proximal to one end of the second heat exchange region. Circulation area of the first sub-flow channel 13221 proximal to the end of the second heat exchange region is configured to be larger than circulation area of other first sub-flow channels 13221, so that the heat exchange medium expands when flowing through the first sub-flow channel 13221 proximal to the end of the second heat exchange region.

According to some embodiments of the present application, the heat exchange body may include a first flow channel pipe and a second flow channel pipe.

A first heat exchange flow channel 1322 may be formed within the first flow channel pipe. A second heat exchange flow channel 1332 may be formed within the second flow channel pipe. The second flow channel pipe is disposed on one side of the first flow channel pipe in a thickness direction of the first flow channel pipe. A portion of the second flow channel pipe corresponding to the downstream flow channel exchanges heat with the first flow channel pipe. A portion of the second flow channel pipe corresponding to the upstream flow channel, on one side facing the first flow channel pipe, is configured to exchange heat for the battery cells.

In the embodiments, the first flow channel pipe and the second flow channel pipe may be formed by extrusion bending or splicing of aluminum profiles. The first flow channel pipe and the second flow channel pipe are assembled in a connection manner, such as welding or bolts, to form the heat exchange body, which results in high production efficiency and high structural strength, thereby facilitating a flexible arrangement.

According to some embodiments of the present application, the present application further provides a battery 10. The battery 10 includes a case 11, a plurality of battery cells 12, and the thermal management system according to any one of the above solutions. The plurality of battery cells 12 are mounted within the case 11. The thermal management system is mounted in the case 11 and configured to exchange heat with the plurality of battery cells 12.

It should be noted that in the embodiments, the first heat exchange flow channel 1322 and the downstream flow channel of the heat exchange device 13 may be arranged within the case 11 or arranged outside the case 11, which is not specifically limited.

The thermal management system according to any one of the above technical solutions is used in the battery 10 to improve the working stability of the battery cells 12 and the battery 10.

According to some embodiments of the present application, the present application further provides an electric device. The electric device includes the battery 10 according to any one of the above solutions, and the battery 10 is configured to provide electrical energy for the electric device.

The electric device may be any one of the aforementioned devices or systems that use the battery 10. The battery 10 according to any one of the above solutions is used to achieve higher working stability of the electric device.

According to some embodiments of the present application, as shown in FIGs. 3 to 7, the present application provides a heat exchange device 13. The heat exchange device 13 includes a heat exchange plate 131, a first flow channel plate 132, a second flow channel plate 133, and an expansion valve 134.

The heat exchange plate 131 is provided with a first surface 1311 and a second surface 1312 opposite to each other in a thickness direction of the heat exchange plate.

The first flow channel plate 132 may be disposed to cover the first surface 1311, and the first flow channel plate 132 is provided with a first groove 1321 recessed in a direction away from the heat exchange plate 131. The first groove 1321 and the first surface 1311 define the first heat exchange flow channel 1322. A surface of the first flow channel plate 132 facing away from the heat exchange plate 131 is provided with a first inlet 1323 and a first outlet 1324. The first inlet 1323 forms an inlet end of the first heat exchange flow channel 1322, and the first outlet 1324 forms an outlet end of the first heat exchange flow channel 1322.

The second flow channel plate 133 may be disposed to cover the second surface 1312, and the second flow channel plate 133 is provided with a second groove 1331 recessed in a direction away from the heat exchange plate 131. The second groove 1331 and the second surface 1312 define a second heat exchange flow channel 1332. The heat exchange plate 131 is provided with a second inlet 1313 and a second outlet 1314. The second inlet 1313 forms an inlet end of the second heat exchange flow channel 1332, and the second outlet 1314 forms an outlet end of the second heat exchange flow channel 1332.

The second heat exchange flow channel 1332 includes an upstream flow channel and a downstream flow channel connected in sequence from the inlet end to the outlet end of the second heat exchange flow channel 1332. A region of the first surface 1311 of the heat exchange plate 131 corresponding to the upstream flow channel is configured to exchange heat for the battery cells 12. The portion of the downstream flow channel is directly opposite to the first heat exchange flow channel 1322 in the thickness direction of the heat exchange plate 131.

The expansion valve 134 is mounted on the first surface 1311 of the heat exchange plate 131; an inlet end of the expansion valve 134 is connected to the first outlet 1324, and an outlet end of the expansion valve 134 is connected to the second inlet 1313.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A heat exchange device, applied to a battery, wherein the heat exchange device comprises:
a heat exchange body, provided with a first heat exchange flow channel and a second heat exchange flow channel; and
an expansion valve, an inlet end of the expansion valve being connected to an outlet end of the first heat exchange flow channel, and an outlet end of the expansion valve being connected to an inlet end of the second heat exchange flow channel;
wherein the second heat exchange flow channel comprises an upstream flow channel and a downstream flow channel connected in sequence; the upstream flow channel is connected to the outlet end of the expansion valve, the upstream flow channel is configured to exchange heat with battery cells, and the downstream flow channel is configured to exchange heat with the first heat exchange flow channel.

2. The heat exchange device according to claim 1, wherein the heat exchange body comprises:
a heat exchange plate, provided with a first surface and a second surface opposite to each other;
a first flow channel plate, disposed to cover the first surface, wherein the first flow channel plate and the first surface define the first heat exchange flow channel; and
a second flow channel plate, disposed to cover the second surface, wherein the second flow channel plate and the second surface define the second heat exchange flow channel, and a region on the first surface corresponding to the upstream flow channel is configured to exchange heat with the battery cells; the first heat exchange flow channel exchanges heat with the downstream flow channel by means of the heat exchange plate.

3. The heat exchange device according to claim 2, wherein the upstream flow channel and the downstream flow channel are sequentially arranged in a length direction of the heat exchange plate, and the first heat exchange flow channel and the downstream flow channel are arranged back-to-back on both sides of the heat exchange plate in a thickness direction of the heat exchange plate.

4. The heat exchange device according to claim 3, wherein the heat exchange plate comprises a first heat exchange region and a second heat exchange region distributed along the length direction of the heat exchange plate; the first heat exchange flow channel and the downstream flow channel are respectively located at two surfaces of the first heat exchange region, and the upstream flow channel is located in the second heat exchange region, wherein a length direction of the first heat exchange region extends along a width direction of the heat exchange plate.

5. The heat exchange device according to claim 4, wherein the inlet end of the second heat exchange flow channel is provided proximal to a first side of the heat exchange plate in the width direction of the heat exchange plate; one end of the upstream flow channel connected to the downstream flow channel is provided proximal to a second side of the heat exchange plate in the width direction of the heat exchange plate, and the end of the upstream flow channel connected to the downstream flow channel and the inlet end of the second heat exchange flow channel are both provided proximal to the first heat exchange region; and
an outlet end of the second heat exchange flow channel is provided proximal to the first side of the heat exchange plate in the width direction of the heat exchange plate; the downstream flow channel extends along the width direction of the heat exchange plate, and one end of the downstream flow channel proximal to the second side of the heat exchange plate in the width direction of the heat exchange plate is connected to the upstream flow channel in a bending manner.

6. The heat exchange device according to any one of claims 2 to 5, wherein an inlet end and the outlet end of the first heat exchange flow channel are both located on the first flow channel plate, and the inlet end and the outlet end of the second heat exchange flow channel are both located on the first surface.

7. The heat exchange device according to claim 6, wherein the expansion valve is mounted on the first surface.

8. The heat exchange device according to any one of claims 1 to 7, wherein a plurality of branch flow channels are provided in parallel between the inlet end and the outlet end of the second heat exchange flow channel; the branch flow channels comprise a first branch flow channel belonging to the upstream flow channel and a second branch flow channel belonging to the downstream flow channel.

9. The heat exchange device according to claim 8, wherein spacing between two adjacent first branch flow channels is greater than spacing between two adjacent second branch flow channels.

10. The heat exchange device according to claim 8 or 9, wherein the first branch flow channel comprises a plurality of first sub-segments and second sub-segments connected in sequence; the first sub-segment extends along a length direction of the heat exchange body, the plurality of first sub-segments are spaced apart from each other along a width direction of the heat exchange body, and the second sub-segment extends along the width direction of the heat exchange body; a first one among the first sub-segments is connected to the outlet end of the expansion valve, one end of each of two adjacent first sub-segments is connected by the second sub-segment, and a last one among the first sub-segments is connected to the inlet end of the second branch flow channel.

11. The heat exchange device according to claim 10, wherein N first sub-segments are provided, and N-1 second sub-segments are provided, wherein N is an even number, and N ≥ 2.

12. The heat exchange device according to any one of claims 8 to 11, wherein the second branch flow channel comprises a main body segment extending along the width direction of the heat exchange body and a connecting segment extending along the length direction of the heat exchange body; one end of the connecting segment is connected to the first branch flow channel, the other end of the connecting segment is connected to one end of the main body segment, and the other end of the main body segment is connected to the outlet end of the second heat exchange flow channel.

13. The heat exchange device according to claim 12, wherein the first heat exchange flow channel comprises a plurality of first sub-flow channels extending along the width direction of the heat exchange body and distributed along the length direction of the heat exchange body, the plurality of first sub-flow channels being connected end-to-end; the first sub-flow channel corresponds to the main body segment of the second branch flow channel.

14. The heat exchange device according to any one of claims 8 to 13, wherein circulation areas of the branch flow channels are the same.

15. The heat exchange device according to any one of claims 8 to 14, wherein the second heat exchange flow channel further comprises a first converging flow channel and a second converging flow channel; end parts of the plurality of branch flow channels are connected in parallel between the first converging flow channel and the second converging flow channel, the inlet end of the second heat exchange flow channel is provided at the first converging flow channel, and the outlet end of the second heat exchange flow channel is provided at the second converging flow channel.

16. The heat exchange device according to claim 15, wherein the inlet end of the second heat exchange flow channel is located between 1/4 and 3/4 of the first converging flow channel in a length direction of the first converging flow channel, and the outlet end of the second heat exchange flow channel is located between 1/4 and 3/4 of the second converging flow channel in a length direction of the second converging flow channel.

17. The heat exchange device according to any one of claims 1 to 16, wherein circulation area of the first heat exchange flow channel proximal to the outlet end of the first heat exchange flow channel is larger than circulation area of the first heat exchange flow channel proximal to an entry end of the first heat exchange flow channel.

18. The heat exchange device according to claims 1 to 17, wherein the heat exchange body comprises:
a first flow channel pipe, wherein the first heat exchange flow channel is formed within the first flow channel pipe; and
a second flow channel pipe, wherein the second heat exchange flow channel is formed within the second flow channel pipe, and the second flow channel pipe is disposed on one side of the first flow channel pipe in a thickness direction of the first flow channel pipe; a portion of the second flow channel pipe corresponding to the downstream flow channel exchanges heat with the first flow channel pipe, and a portion of the second flow channel pipe corresponding to the upstream flow channel, on one side facing the first flow channel pipe, is configured to exchange heat for the battery cells.

19. A heat exchange system, applied to a battery, wherein the heat exchange system comprises:
the heat exchange device according to any one of claims 1 to 18;
a compressor, wherein an inlet end of the compressor is connected to an outlet end of the second heat exchange flow channel; and
a condenser, wherein an inlet end of the condenser is connected to an outlet end of the compressor, and an outlet end of the condenser is connected to an inlet end of the first heat exchange flow channel.

20. A battery, wherein the battery comprises:
a case;
a plurality of battery cells, wherein the plurality of battery cells are mounted within the case; and
the heat exchange system according to claim 19, wherein the heat exchange system is mounted in the case and is configured to exchange heat with the plurality of battery cells.

21. An electric device, wherein the electric device comprises:
the battery according to claim 20, wherein the battery is configured to supply power to the electric device.
